# EUROPEAN PATENT APPLICATION

(11) **EP 1 705 529 A1**
(43) Date of publication of application: **27.09.2006**
(21) Application number: 05006182.9
(22) Date of filing: 22.03.2005
(51) Int. Cl.: G03G 21/04, H04N 1/00

(54) **Method and device for controlling differential gloss and print item produced thereby**

(71) Applicant: EASTMAN KODAK COMPANY, Rochester, New York 14650 (US)
(72) Inventor: Chowdry, Arun, Pittsfrod New York 14534 (US); Tyagi, Dinesh, Fairport NY 14450 (US); Schulze-Hagenest, Detlef, 24113 Molfsee (DE)
(74) Representative: Lauerwald, Jörg

(57) **Abstract**

The invention describes a method to control differential gloss of halftone areas produced with substantially clear toner.
It is an objective of this invention to provide a method which allows to produce digital watermarks on paper without being limited in the gloss properties of the toner, the paper or and selected fusing technology.
The present invention relates to a method producing clear watermarks using Glossmark technology with clear toner/ink only. Glossmark technology is for controlling the differential gloss of an image using the steps selecting a first halftone image having a first anisotropic structure, selecting a second halftone image having a second structure different from that of the first halftone, applying the first halftone to at least some portion of the halftone image and applying the second halftone to another portion of the halftone image.

## Description

The invention describes a method to achieve a method to control differential gloss of halftone areas produced with substantially clear toner. More specifically it describes a method to produce digital watermarks by control of the print gloss when halftone images of substantially clear toner are printed on a substrate.

It is desirable to protect a document against copying. This could be done in a manner that part of the content can be readily observed by a human reader but not by a copier or scanner. An image is printed using clear toner or ink, creating a difference in reflected light and diffused light that can be distinguished by a human reader by looking the paper at an angle, but cannot be detected by a copier or scanner that is restricted to reading at right angles to the page.

Since some time clear or white toner is used to produce digital watermarks that cannot be copies or scanned but can be observed by a human reader.

US4210346 and US5695220 describes a method to achieve different diffused light characteristic at different angles using particular white paper and particulat white toner. This methods needs specific designed toners and papers.

US6108512 describes non-copyable prints printing text using clear toner. It can be detected by human eye due to the differential gloss but not with a conventional scanner. This method needs again specifically matched paper and toner having a large difference in gloss. It works in the combination glossy toner on matte paper and matte toner on glossy paper but not using e.g. glossy paper and toner in the same gloss range that is common in the field of digital commercial printing.

US5788285 describes a method and product for making non-reproducible documents, in which a nearly invisible indicia on the document is printed by continuous screened lines of a desired pitch, and a background that will not reproduce by copying that is formed by orthogonal reproduction of positive/negative images of continuous lines to produce broken lines of a desired width and pitch

US5853197 describes a security document, which is provided comprising a substrate having a top surface for carrying indicia. The security term is composed of a pattern of security term elements. The background elements and/or the security term elements differ in element size, shape, angle, density, and/or frequency between adjacent areas.

US5583660 describes a screen comprises columns and rows of halftone dot centers in which there is equal spacing in row to row, column to column, and column to rows relationships, but the columns are not geometrically orthogonal (perpendicular) to the rows.

US5506671 describes an electrophotographic printing process for forming one or more colorless toner images in combination with at least one color toner image produced in an electrophotographic way on a receptor element.

US 20030231349, US20040000786 and US20040001233 describe a method to manipulate differential gloss of an image (picture or text) by selectively applying halftones with anisotropic structure characteristics that are significantly different in orientation while remaining identical in density (Glossmark). A gloss image is thus superimposed within an image without the need for special toners/inks or paper. The teaching of these documents is limited to color halftone images.

All of the above are herein incorporated by reference in their entirety for their teaching.

It is an objective of this invention to provide a method which allows to produce digital watermarks on paper without the limitations described above that means without being limited in the gloss properties of the toner, the paper or and selected fusing technology.

The present invention relates to a method producing clear watermarks using Glossmark technology with clear toner/ink only. Glossmark technology is for controlling the differential gloss of an image using the steps selecting a first halftone image having a first anisotropic structure, selecting a second halftone image having a second structure different from that of the first halftone, applying the first halftone to at least some portion of the halftone image and applying the second halftone to another portion of the halftone image. The second structure maybe anisotropic as well.

The number of structures is not limited. In a specific embodiment two halftone structures are used. The second halftone maybe applied to the remaining part of the halftone image or to apart of it only. The first anisotropic structure and the second anisotropic structure orientation maybe 90 degrees apart.

Halftone in this context means screened structures of toner layers with a preferred area coverage of app. 20% to 80%. This range they do exhibit anisotropic structures for solid areas and toner/ink-less areas. In areas with low (10%) or high (90%) area coverage the effect is not sufficient to be observable by human eye.

The present invention also relates to a process where the gloss of the paper and the gloss of the toner measured separately on 100% covered areas are to be about the same. In this cases the existing methods achieve differential gloss using clear toners without using anisotropic structures fail as there is no differential gloss is existing.

The substantially clear toners in the present invention are essentially the same composition as color toners used in the art, except for the dyes and pigments. The clear toners are substantially transparent, such that the inherent colors of the applied color toners are not materially masked and the relative amount of reflected light from the image is essentially maintained and not materially diminished by the clear toner. The clear toner may be slightly tinted, pigmented or dyed up to a degree where it is substantially transparent uniformly over the visible spectrum (400 to 700 nm).

The method is particularly suitable for electrophotographic printers using dry toners as these toners having a median particle size in the range 5 - 10 µm, which, when fused may show a pregnant glossmark behavior.

In particular the present invention relates to a method to produce clear watermarks, where the structure of the second halftone has an anisotropic orientation as well.

This technology allows producing visible watermarks using toners that produce image of about the same gloss as the paper with the appropriate fusing technology.

## Claims

1. A method for controlling the differential gloss of an image using the steps selecting a first halftone image having a first anisotropic structure, selecting a second halftone image having a second structure different from that of the first halftone, applying the first halftone to at least some portion of the halftone image and applying the second halftone to another portion of the halftone image
**characterized in that**
a toner is used that is substantially colorless to realize the first and second halftone images.

2. The method of claim 1, **characterized in that** the second structure has an anisotropic orientation.

3. The method of claim 2, **characterized in that** the image comprises area densities of 20% to 80%.

4. The method of claim 3, **characterized in that** the gloss of the paper and the toner measured separately on 100% covered areas is to be about the same.

5. The method of claim 3 **characterized in that** the first anisotropic structure orientation and the second anisotropic structure orientation are 90 degrees apart

6. The method of claim 3 **characterized in that** the halftone image is intended for an electrophotographic printer.

7. The method of claim 3 **characterized in that** the second halftone is applied to the remaining portion of the halftone image.

8. A halftone image comprising: a first halftone having an anisotropic structure orientation; and at least one additional halftone type having a structure different lo from the first halftone, where the first halftone is applied to a portion of the halftone image and the at least one additional halftone type is applied to another portion of the image
**characterized in that**
a toner is used that is substantially colorless to realize the first and second halftone images.

9. A print item comprising: a substrate and a halftone image comprising: a first halftone having an anisotropic structure orientation; and at least one additional halftone type having a structure different lo from the first halftone, where the first halftone is applied to a portion of the halftone image and the at least one additional halftone type is applied to another portion of the image
**characterized in that**
a toner is used that is substantially colorless to realize the first and second halftone images.

10. A device for producing a print item comprising: a substrate and a halftone image comprising: a first halftone having an anisotropic structure orientation; and at least one additional halftone type having a structure different lo from the first halftone, where the first halftone is applied to a portion of the halftone image and the at least one additional halftone type is applied to another portion of the image
**characterized in that**
a toner is used that is substantially colorless to realize the first and second halftone images.
